# EUROPEAN PATENT APPLICATION

(11) **EP 4 632 591 A1**
(43) Date of publication of application: **15.10.2025**
(21) Application number: 23902408.6
(22) Date of filing: 17.11.2023
(51) Int. Cl.: G06F 16/16, G06F 16/13

(54) **FILE AGGREGATION METHOD, FILE AGGREGATION APPARATUS, AND SERVER**

(30) Priority: 16.12.2022 CN 202211624864
(71) Applicant: ZTE CORPORATION, Shenzhen, Guangdong 518057 (CN)
(72) Inventor: LUO, Jun, Shenzhen, Guangdong 518057 (CN)
(74) Representative: Ziebig Hengelhaupt Intellectual Property Attorneys Patentanwaltskanzlei PartGmbB
(86) International application number: PCT/CN2023/132412
(87) International publication number: WO 2024/125208

(57) **Abstract**

The present application belongs to the technical field of communications. Disclosed are a file aggregation method, a file aggregation apparatus, and a server. The file aggregation method provided in the present application is applied to a server, and comprises: determining a target dimension, which is used for the selection of a hotspot file, wherein the hotspot file is a file of concern; acquiring hotspot files, which are selected according to the target dimension, wherein there are a plurality of hotspot files, and the hotspot files are some of files on a server; and performing aggregation processing on the hotspot files, so as to obtain an aggregated file including the hotspot files.

## Description

### CROSS-REFERENCE TO RELATED APPLICATIONS

The present application is proposed based on and claims priority to Chinese Application No. 202211624864.1, filed with the Chinese Patent Office on December 16, 2022, with the title "FILE AGGREGATION METHOD, FILE AGGREGATION APPARATUS, AND SERVER", the disclosure of which is hereby incorporated by reference in its entirety.

### TECHNICAL FIELD

The present application belongs to the technical field of communication technology, and specifically relates to a file aggregation method, a file aggregation apparatus and a server.

### BACKGROUND

At present, Internet services often involve file provision service. During the file provision service, the server will respond to the client's service request and send the file to the client. Once the client receives the file, it can enjoy the services.

However, since most of the files accessed by the client are small files and fragmented files, these small files and fragmented files are scattered across the server, it is difficult to quickly find the files required by the client from the server.

### SUMMARY

Embodiments of the present application provide a file aggregation method, a file aggregation apparatus, and a server.

In the first aspect, an embodiment of the present application provides a file aggregation method, applied to a server, comprising: determining a target dimension for selecting a hot file, where the hot file is a file of concern; acquiring hot files selected according to the target dimension, where the number of the hot files is multiple and the hot files are part of the files on the server; and performing aggregation processing on the hot files so as to obtain an aggregated file containing the hot files.

In the second aspect, an embodiment of the present application provides a file aggregation apparatus, comprising: a determination module for determining a target dimension for selecting a hot file, where the hot file is a file of concern; an acquisition module for acquiring hot files selected according to the target dimension, where the number of the hot files is multiple and the hot files are part of the files on the server; and a processing module for performing aggregation processing on the hot files so as to obtain an aggregated file containing the hot files.

In the third aspect, an embodiment of the present application provides a server comprising a processor and a memory, wherein the memory stores a program or instructions thereon, which, when executed by the processor, implement the steps of the method according to the first aspect.

In the fourth aspect, an embodiment of the present application provides a readable storage medium having a program or instructions stored thereon, which, when executed, implement the steps of the method according to the first aspect.

### BRIEF DESCRIPTION OF DRAWINGS

Fig.1 is a flowchart of a file aggregation method provided by an embodiment of the present application;
Fig. 2 is a flowchart of another file aggregation method provided by an embodiment of the present application;
Fig. 3 is a flowchart of another file aggregation method provided by an embodiment of the present application;
Fig. 4 is a flowchart of another file aggregation method provided by an embodiment of the present application;
Fig. 5 is a flowchart of another file aggregation method provided by an embodiment of the present application;
Fig. 6-1 is a flowchart of another file aggregation method provided by an embodiment of the present application;
Fig. 6-2 is a schematic diagram of a file aggregation process provided by an embodiment of the present application;
Fig. 7-1 is a flowchart of another file aggregation method provided by an embodiment of the present application;
Fig. 7-2 is a schematic diagram of a file aggregation process provided by an embodiment of the present application;
Fig. 8 is a schematic diagram of the structure of a file aggregation apparatus provided by an embodiment of the present application.

### DETAILED DESCRIPTION

The technical solutions in the embodiments of the present application will be described clearly below in conjunction with the drawings in the embodiments of the present application. Obviously, the described embodiments are part of the embodiments of the present application, not all of them. Based on the embodiments in the present application, all other embodiments obtained by those skilled in the art belong to the protection scope of the present application.

The terms "first", "second", etc. in the specification and claims of the present application are used to distinguish similar objects, and are not used to describe a specific order or sequence. It should be understood that data used in this way can be interchangeable where appropriate, so that the embodiments of the present application can be implemented in an order other than those illustrated or described here, and the objects distinguished by "first", "second", etc. are generally of one type, and the number of objects is not limited. For example, the first object can be one or more. In addition, "and/or" in the specification and claims represents at least one of the connected objects, and the character "/" generally indicates that the objects associated with each other are in an "or" relationship.

It should be noted that the file aggregation method provided in the embodiment of the present application can be executed by a server, and the server can provide file services. The file aggregation method provided in the embodiment of the present application is described in detail below through specific embodiments and application scenarios in conjunction with the accompanying drawings.

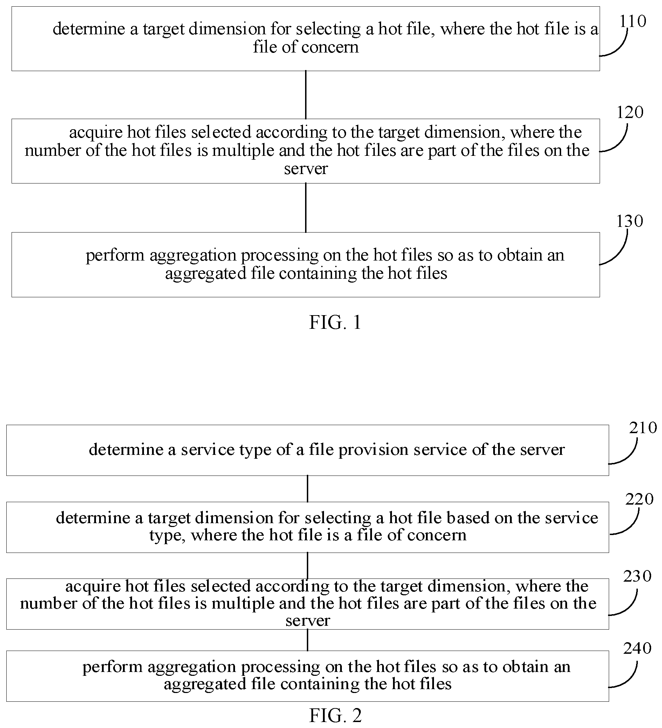

As shown in Fig. 1, the embodiment of the present application provides a file aggregation method, applied to a server, may comprise:
Step 110: a target dimension for selecting a hot file is determined, where the hot file is a file of concern;
Step 120: hot files selected according to the target dimension are acquired, where the number of the hot files is multiple and the hot files are part of the files on the server;
Step 130: aggregation processing is performed on the hot files so as to obtain an aggregated file containing the hot files.

In step 110, hot files can be understood as the files of concern provided by the file provision service of the server. For example, regarding all the files provided by the file provision service of the server, if 20% of the files provide 80% of the user services, then these 20% of the most - concerned files can be regarded as the hot files of concern.

In step 110, the target dimension can characterize the dimension for selecting hot files. For example, the target dimension can be the hot time period, or the number of file accesses, or the hot time period and the number of file accesses, etc., which are not specifically limited in the present application.

In step 120, multiple hot files selected according to the target dimension are acquired, wherein the multiple hot files belong to part of the files on the server rather than all the files on the server. For example, in practical applications, the file provision service of the server may follow the 20/80 principle, where 20% of the files provide 80% of the user services. The cost of aggregating all files is too high, wasting server performance, and the search cost for all file indexes is also high, affecting user services. Based on this, the hot files mentioned in the embodiments of the present application are a small part of files on the server. Identifying some files (rather than all files) on the server as hot files can reduce aggregation cost and avoid wasting server performance.

In step 130, the multiple hot files are aggregated into an aggregated file, to facilitate searching for files required by the client in the aggregated file, thereby narrowing the search scope; on the other hand, since the files undergoing aggregation processing are hot files, which are files of concern, by searching from the aggregated file that containing the hot files, the probability of finding the files required by the client from the aggregated file can be significantly improved.

According to the file aggregation method provided by the embodiment of this application, by the method comprising: determining a target dimension for selecting a hot file, the hot file is a file of concern; acquiring hot files selected according to the target dimension, the number of the hot files is multiple and the hot files are part of the files on the server; and performing aggregation processing on the hot files so as to obtain an aggregated file containing the hot files. In this way, on the one hand, by performing aggregation processing on the files to obtain an aggregated file, it is convenient to search for the files required by the client in the aggregated file, narrowing the search scope. On the other hand, since files undergoing aggregation processing are hot files, which are files of concern, by searching from the aggregated file that containing the hot files, the probability of finding the files required from the aggregated file can be significantly improved. Through these two aspects, the required file can be quickly found, thus solving the technical problem of difficulty in quickly finding the files required by the client from the server.

In a specific embodiment, in order to conveniently find the file corresponding to the file provision service required by the client from the server, the target dimension for selecting hot files can be determined based on the service type of the file provision service of the server. The following is an example for illustration.

As shown in Fig. 2, the embodiment of the present application provides a file aggregation method, applied to a server, may comprise:
Step 210: a service type of a file provision service of the server is determined;
Step 220: a target dimension for selecting a hot file based on the service type is determined, where the hot file is a file of concern;
Step 230: hot files selected according to the target dimension are acquired, where the number of the hot files is multiple and the hot files are part of the files on the server;
Step 240: aggregation processing is performed on the hot files so as to obtain an aggregated file containing the hot files.
Step 210 and Step 220 can be sub-steps of Step 110.

The specific content of Step 230 can refer to Step 120, and the specific content of Step 240 can refer to Step 130.

In Step 210, the service types of the file provision service of the server can comprise live broadcast type or non-live broadcast type. The file type provided by the file provision service of live broadcast type can be a live broadcast file, and the file type provided by the file provision service of non-live broadcast type can be a non-live broadcast file.

It can be understood that, since the files of live broadcast file type have natural continuity, the files of non-live broadcast type have randomness, the embodiment of the present application can determine the target dimension for selecting the hot files according to the service type of the file provision service of the server. If the service type of the file provision service of the server is a live broadcast type, the target dimension for selecting the hot files can be determined to be a hot time period; if the service type of the file provision service of the server is a non-live broadcast type, the target dimension for selecting the hot files can be determined to be the number of file accesses during the hot time period.

Furthermore, if the service type of the file provision service of the server is a live broadcast type, a hot file is selected from the live broadcast file on the server according to the hot time period as a dimension. If the service type of the file provision service of the server is a non-live broadcast type, a hot file is selected from the non-live broadcast file on the server according to the number of file accesses as a dimension.

In this way, according to the file aggregation method provided in the embodiment of the present application, hot files can be selected from files of a specific type according to specific dimensions based on the service type of file provision service of the server, so as to quickly find the files corresponding to the file provision service required by the client from the server.

It can be understood that since the service types of file provision service of the server can comprises live broadcast type or non-live broadcast type, the embodiments of the present application can be based on the hot content access characteristics, for the live broadcast type, use the hot time period to make statistics to the hot files, that is, to make statistics to the hot traffic distribution characteristics in one period, calculate the hot time period, and aggregate the live files within the hot time period; for the non-live broadcast type, use the number of accesses to make statistics, that is, to make statistics to the number of file accesses to a file that has been accessed in one period, and aggregate the files whose number of file accesses exceeds the first threshold as hot files. The following examples are given for the service types of the file provision service of the server, which are live broadcast type or non-live broadcast type.

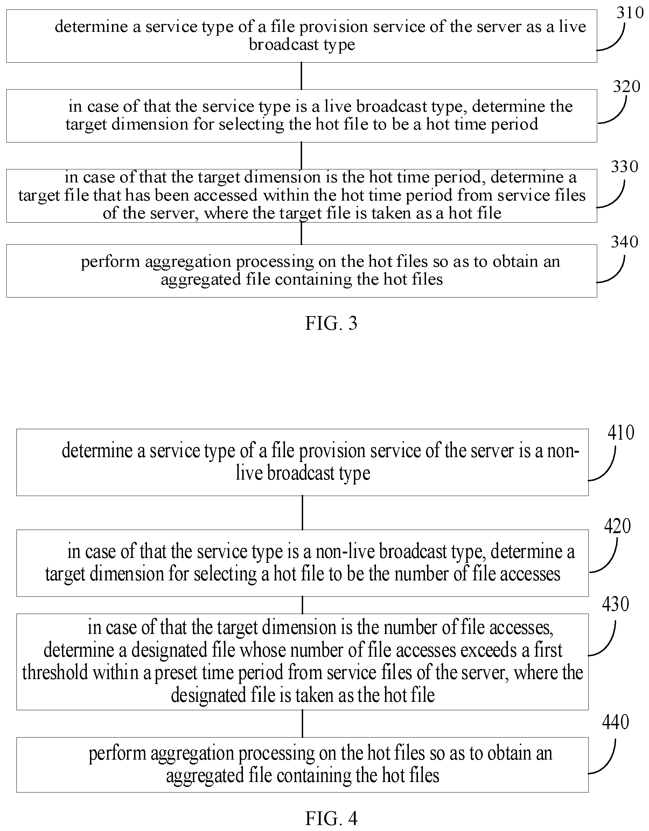

In a specific embodiment, as shown in Fig. 3, when the service type is a live broadcast type, the embodiment of the present application provides a file aggregation method, applied to a server, may comprise:
Step 310: a service type of file provision service of the server is determined as a live broadcast type;
Step 320: in case of that the service type is a live broadcast type, a target dimension for selecting a hot file is determined to be a hot time period;
Step 330: in case of that the target dimension is a hot time period, a target file that has been accessed within the hot time period is determined from service files of the server, where the target file is taken as a hot file;
Step 340: aggregation processing is performed on the hot files so as to obtain an aggregated file containing the hot files.

Step 310 can be a sub-step of Step 210; Step 320 can be a sub-step of Step 220; Step 330 can be a sub-step of Step 230; Step 340 can refer to the specific content of Step 130.

In Step 310, files of the live broadcast type generally have continuity. For example, a certain file provision service can continuously provide multiple files, and then these multiple files have continuity. In the embodiment of the present application, the service type of the file provision service can be preset as the live broadcast type according to the number of files provided by the file provision service. Then, the service type of the file provision service of the server can be determined according to the preset service type of the file provision service. Of course, the embodiment of the present application can also detect the number of files provided by the file provision service in real time to determine the service type of the file provision service of the server, and the present application does not make specific restrictions.

In Step 320, the embodiment of the present application can specifically acquire historical statistical data of files that have been accessed within a statistical period including M time periods; determine the N time periods with the most file accesses among the M time periods of the statistical period as hot time periods, where N is a positive integer less than M, and determine the hot files from the files that have been accessed within the hot time periods. The duration of each time period in the M time periods of the statistical period is the same, the shorter the duration of the statistical period, the smaller M is, and the higher the real-time nature of the determined hot files is. The shorter the duration of the hot time period, the smaller N is, the fewer the number of determined hot files is, and the smaller the aggregation cost is.

For example, the embodiment of the present application can statistic the 5 hours with the highest popularity (this value is adjustable) in the 24 hours of the previous day as the hot time period. Under normal circumstances, the server has the largest service traffic and the greatest hard disk performance pressure in this 5-hour hot time period of the previous day. Then, the hot files are determined from the files that have been accessed within the 5 hours with the highest popularity of the previous day.

In Step 330, the embodiment of the present application can directly use all files that have been accessed during the hot time period as hot files according to actual needs. For example, all files that have been accessed within the 5 hours with the highest popularity of the previous day are used as hot files. In this way, it is convenient to find all the live broadcast files required by the client from the server during the hot time period.

Or, in Step 330, the embodiment of the present application can use part of the more popular files that have been accessed during the hot time period as hot files according to actual needs. Specifically, the above Step 330 can specifically comprise:
determining a target file that has been accessed within the hot time period and whose number of file accesses is greater than a second threshold from service files of the server, and using the target file as a hot file. For example, among the files that have been accessed within the 5 hours with the highest popularity on the previous day, the files with the number of file accesses greater than 3 (this value is adjustable) are regarded as hot files. In this way, the file aggregation method provided by the embodiment of the present application can simultaneously screen hot files according to the hot time period and number of file accesses, thereby increasing the probability of finding hot files from the aggregated file.

In addition, in Step 330, the embodiment of the present application can pre-pull and aggregate the hot files (live content) in advance when the server is in the hot time period according to actual needs, reduce the delay caused by the server re-upward return to the source, and decrease the first packet delay for user services. Specifically, in the above Step 330, determining a target file that has been accessed within the hot time period from services file of the server can specifically comprise:
if the service type of the file provision service of the server is the live broadcast type, during the hot time period of a first statistical period and before receiving a live broadcast file request from a client, pre-determining a target file that has been accessed within the hot time period in a second statistical period from service files of the server; wherein the second statistical period is the previous statistical period of the first statistical period, and the target file is a live broadcast file.

For example, the statistical period is 24 hours of a day, the first statistical period is today's 24 hours, and the second statistical period is yesterday's 24 hours. The hot time period in the second statistical period can be from 6 pm to 11 pm yesterday. During the period from 6 pm to 11 pm today and before receiving the live broadcast file request from the client, the hot files that have been accessed between 6 pm and 11 pm yesterday are pre-determined from service files of the server, and these hot files are pre-pulled and aggregated in advance, reducing the delay caused by the server re-upward return to the source, and decreasing the first packet delay for user services.

According to the file aggregation method provided in the embodiment of the present application, if the service type is a live broadcast type, the target dimension is determined to be a hot time period, and the target file that has been accessed within the hot time period is determined from service files of the server as the hot file, so as to quickly find the live broadcast files required by the client from the server.

In another specific embodiment, as shown in Fig. 4, if the service type is a live broadcast type, the embodiment of the present application provides a file aggregation method, applied to a server, may comprise:
Step 410: a service type of a file provision service of the server is determined as a non-live broadcast type;
Step 420: in case of that the service type is a non-live broadcast type, a target dimension for selecting a hot file is determined to be the number of file accesses;
Step 430: in case of that the target dimension is the number of file accesses, a designated file whose number of file accesses exceeds a first threshold within a preset time period is determined from service files of the server, where the designated file is taken as a hot file;
Step 440: aggregation processing is performed on the hot files so as to obtain an aggregated file containing the hot files.

Step 410 can be a sub-step of Step 210; Step 420 can be a sub-step of Step 220; Step 430 can be a sub-step of Step 230; Step 440 can refer to the specific content of Step 130.

In the embodiment of the present application, files of non-live broadcast type generally have randomness. For example, if a file is randomly accessed by a client in any period of 24 hours a day, then the file has randomness. The embodiment of the present application can pre-set the service type of the file provision service as a non-live broadcast type. Then, the preset service type of the file provision service can determine the service type of the file provision service of the server. Of course, the embodiment of the present application can also detect the historical access time of the file provided by the file provision service in real time to determine the service type of the file provision service of the server, and the present application does not make specific restrictions.

According to the file aggregation method provided in the embodiment of the present application, if the service type is a non-live broadcast type, the target dimension is determined to be the number of file accesses, and the designated file whose number of file accesses exceeds a first threshold within a preset time period is determined from service files of the server as the hot file, so as to quickly find the non-live broadcast files required by the client from the server.

Of course, if the target dimension is the number of file accesses, in addition to taking the designated files whose number of file accesses exceeds a first threshold within a preset time period as hot files, the embodiments of the present application may also determine hot files in other ways. For example, if the target dimension is the number of file accesses, counting the number of file accesses of each file that has been accessed within a preset time period, and sorting each accessed file in order of the number of file accesses, and taking the files with the highest access popularity and a specified aggregation ratio (for example, the top 20%) as hot files. The specified aggregation ratio refers to the ratio of the number of hot files to be aggregated to the number of all files that have been accessed within a preset time period. In practical applications, if the performance pressure of the server is too high and needs to be further decreased, the specified aggregation ratio can be decreased to reduce the number of hot files to be aggregated.

In addition, when performing aggregation processing on the file, the embodiment of the present application can adopt a server performance balancing strategy to adjust the aggregation frequency of the hot files based on the performance indicator of the server to ensure that the aggregation processing on the hot files does not affect the existing user services.

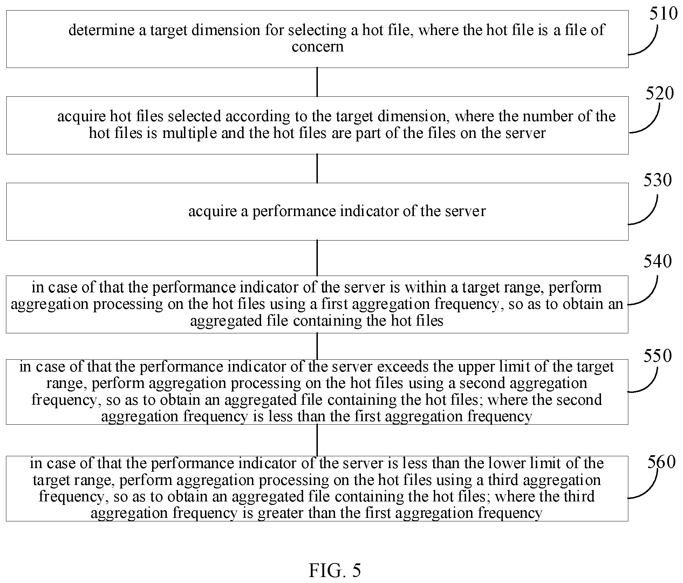

As shown in Fig. 5, the embodiment of the present application provides a file aggregation method, applied to a server, may comprise:
Step 510: a target dimension for selecting a hot file is determined, where the hot file is a file of concern;
Step 520: hot files selected according to the target dimension are acquired, where the number of the hot files is multiple and the hot files are part of the files on the server;
Step 530: a performance indicator of the server is acquired;
Step 540: in case of that the performance indicator of the server is within a target range, aggregation processing is performed on the hot files using a first aggregation frequency, so as to obtain an aggregated file containing the hot files;
Step 550: in case of that the performance indicator of the server exceeds the upper limit of the target range, aggregation processing is performed on the hot files using a second aggregation frequency, so as to obtain an aggregated file containing the hot files; where the second aggregation frequency is less than the first aggregation frequency;
Step 560: in case of that the performance indicator of the server is less than the lower limit of the target range, aggregation processing is performed on the hot files using a third aggregation frequency, so as to obtain an aggregated file containing the hot files; where the third aggregation frequency is greater than the first aggregation frequency.

Step 510 may refer to the specific content of Step 110; Step 520 may refer to the specific content of Step 120; Steps 530 to 560 may be sub-steps of Step 130.

The performance indicator can be used to characterize the usage pressure of the server. For example, the performance indicator comprises at least one of the CPU usage rate, memory usage rate, input/output indicator or network occupancy indicator. When the usage pressure of the server is high, the file aggregation frequency is decreased to avoid a significant impact on the server's user services during peak periods. When the pressure is low, increase the file aggregation frequency and increase the number of files aggregated.

It is understandable that the server often has a high performance pressure when providing services to the client during the hot time period, at this time, consuming the performance to perform file aggregation operations will affect user services. Therefore, the embodiment of the present application adopts a server performance balance strategy, which adjusts the speed of file aggregation in real time by real-time statistics of the performance pressure of the current server to ensure that it does not affect the existing user services. In order to avoid a greater impact on the server during peak period, the embodiment of the present application can collect the performance indicator of the server at regular intervals, and decrease the file aggregation frequency when the performance indicator of the server exceeds a certain threshold to avoid affecting the actual user service; in addition, when the performance indicator of the server is lower than a certain threshold, increasing the file aggregation frequency to make full use of server resources and increase the number of files aggregated.

In the embodiment of the present application, the aggregated file can be located in the same sector of the server. In this case, the server does not need to search for a large number of fragmented files on the server. Since the hot files are aggregated into aggregated files and are concentrated in the same sector of the hard disk, I/O resources are saved.

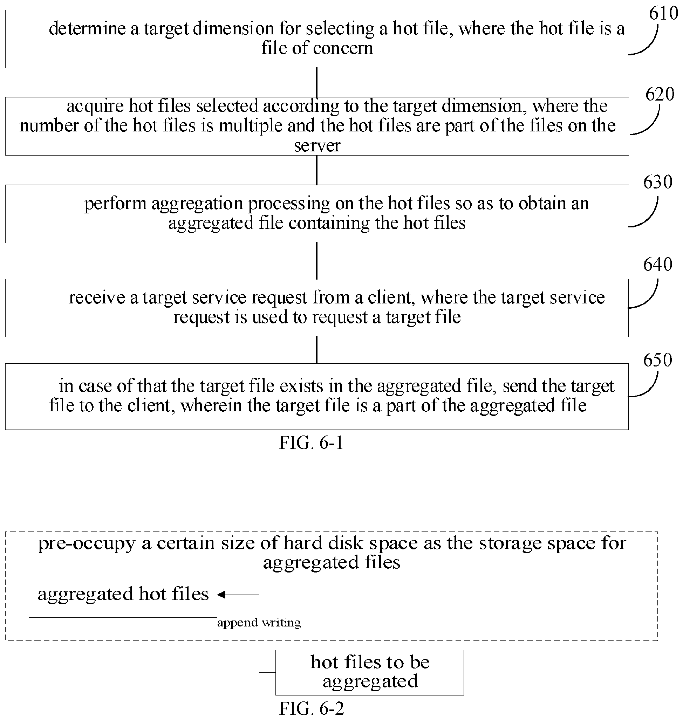

In addition, after aggregating the hot files to obtain the aggregated files, the server of the embodiment of the present application can also use the aggregated files to provide file services. As shown in Fig. 6-1, the embodiment of the present application provides a file aggregation method, applied to the server, may comprise:
Step 610: a target dimension for selecting a hot file is determined, where the hot file is a file of concern;
Step 620: hot files selected according to the target dimension are acquired, where the number of the hot files is multiple and the hot files are part of the files on the server;
Step 630: aggregation processing is performed on the hot files so as to obtain an aggregated file containing the hot files;
Step 640: a target service request is received from a client, where the target service request is used to request a target file;
Step 650: in case of that the target file exists in the aggregated file, the target file is sent to the client, wherein the target file is a part of the aggregated file.

Step 610 may refer to the specific content of Step 110; Step 620 may refer to the specific content of Step 120; Step 630 may refer to the specific content of Step 130.

In Step 630, file aggregation can be implemented in a variety of ways, and the present application does not make specific restrictions. For example, the embodiment of the present application can first perform aggregation processing on multiple hot files and then directly store the aggregated files in the server disk. For another example, the embodiment of the present application can also first pre-occupy a file with a certain storage space size in the server operating system as an aggregated file, and then partially write and replace the hot file to be aggregated. For another example, as shown in Fig. 6-2, the embodiment of the present application can also pre-occupy a certain size of hard disk space as the storage space for the aggregated file, and after detecting the hot file to be aggregated, complete the file aggregation in the pre-occupied storage space by append writing.

In Step 630, while obtaining the aggregated file containing the hotspot files, the embodiment of the present application can also record the file identifier (such as file name or file URL) of each file in the multiple hot files and the position of each file in the aggregated file in the index list corresponding to the aggregated file. Wherein in order to store the index information of the aggregated file corresponding to the hot files, the storage form of the index list can be a hash table, a memory database, a B+ tree, etc., which is not specifically limited in the present application.

In Step 640, the target service request carries the identifier of the target file. When the identifier of the target file can be found in the index list corresponding to the aggregated file, it is determined that the target file exists in the aggregated file.

Furthermore, in Step 650, if the target file exists in the aggregated file, the position of the target file in the aggregated file can be determined based on the identifier of the target file, and based on the aggregated file and the position of the target file in the aggregated file, the target part of the aggregate file is determined to be the content of the target file, and the target file is sent to the client.

The present application does not impose any specific restrictions on the reading method of the content of the target file (i.e., small file) in the aggregated file (i.e., large file). For example, taking the case where the file provision service is an HTTP (Hyper Text Transfer Protocol) file service, after locating the aggregated file and determining the location information of the target file in the aggregated file, replacing the identifier of the target file stored in the request header of the target service request with the identifier of the aggregated file and the location information of the target file in the aggregated file, so as to read the content of the target file in the aggregated file based on the request header of the target service request.

On the contrary, if the identifier of the target file is not found in the index list corresponding to the aggregated file, it is determined that the target file does not exist in the aggregated file. In the case that the target file does not exist in the aggregated file, the server triggers a return-to-source request for the target file, which is used to request the target file from the server or resource server (such as an upper-level server or other peer servers). After the server downloads the target file, it sends the target file to the client.

According to the file aggregation method provided in the embodiment of the present application, after performing aggregation processing on a plurality of hot files with high client concern to obtain an aggregated file, the file content accessed by the client is most likely the content of the aggregated hot file. In this case, the server can provide the contents of a plurality of hot files to the client at one time by providing a part of the aggregated file, without providing the contents of a plurality of hot files to the client one by one, thereby decreasing the number of disk seek operations on the server, improving the I/O (input/output) performance of the service, and solving the problem in the related art that the disk fragmentation of the server is serious and causes the insufficient disk performance of the server.

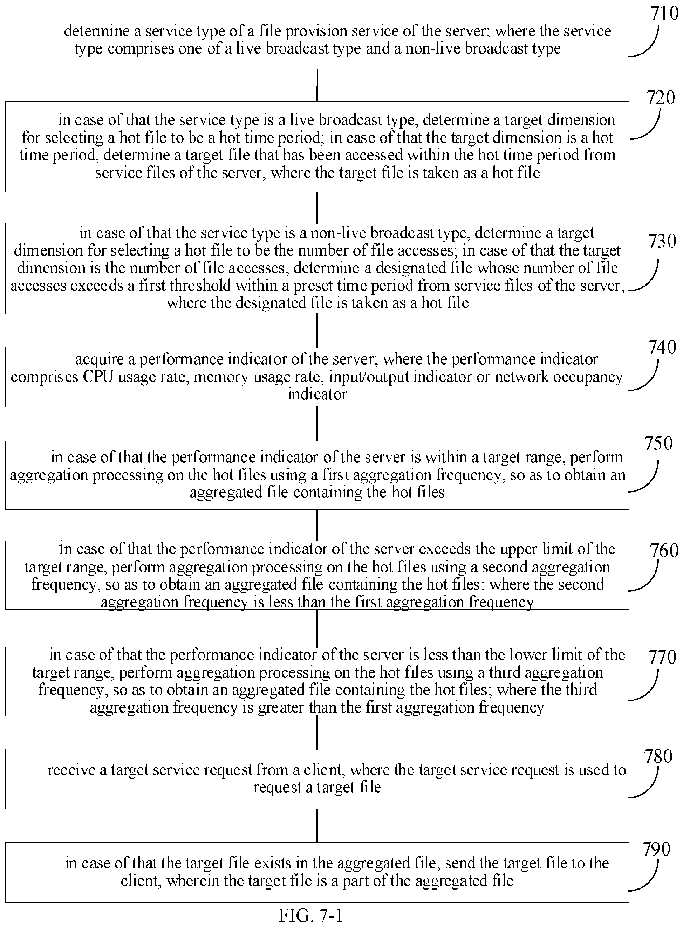

In addition, in practical applications, as shown in Fig. 7-1, the file aggregation method provided in the embodiment of the present application may comprise:
Step 710: a service type of a file provision service of the server is determined; where the service type comprises one of a live broadcast type and a non-live broadcast type;
Step 720: in case of that the service type is a live broadcast type, a target dimension for selecting a hot file is determined to be a hot time period; in case of that the target dimension is a hot time period, a target file that has been accessed within the hot time period is determined from service files of the server, where the target file is taken as a hot file;
Step 730: in case of that the service type is a non-live broadcast type, a target dimension for selecting a hot file is determined to be the number of file accesses; in case of that the target dimension is the number of file accesses, a designated file whose number of file accesses exceeds a first threshold within a preset time period is determined from service files of the server, where the designated file is taken as a hot file;
Step 740: a performance indicator of the server is acquired; where the performance indicator comprises CPU usage rate, memory usage rate, input/output indicator or network occupancy indicator;
Step 750: in case of that the performance indicator of the server is within a target range, aggregation processing is performed on the hot files using a first aggregation frequency, so as to obtain an aggregated file containing the hot files;
Step 760: in case of that the performance indicator of the server exceeds the upper limit of the target range, aggregation processing is performed on the hot files using a second aggregation frequency, so as to obtain an aggregated file containing the hot files; where the second aggregation frequency is less than the first aggregation frequency;
Step 770: in case of that the performance indicator of the server is less than the lower limit of the target range, aggregation processing is performed on the hot files using a third aggregation frequency, so as to obtain an aggregated file containing the hot files; where the third aggregation frequency is greater than the first aggregation frequency;
Step 780: a target service request is received from a client, where the target service request is used to request a target file;
Step 790: in case of that the target file exists in the aggregated file, the target file is sent to the client, wherein the target file is a part of the aggregated file.

The embodiment of the present application can statistic and predict the hot files on the server. According to actual experience, the content of hot files is likely to be repeatedly requested by many users, so the hot files are predicted by hot statistics. In this way, the content accessed by new users is likely to be the content of the aggregated hot files. In this case, the number of disk seek operations on the server will be decreased, and the I/O performance of the service will be improved.

It can be understood that the present application does not impose specific restrictions on the operating systems of the client and server, and can be applied to Linux, Windows, Unix-like operating systems and other operating systems, and to network environments such as TCP/UDP, that is, the client can send file requests through the network and acquire the file contents sent by the server.

The server can be a video-on-demand server supporting RTSP (Real Time Streaming Protocol) video-on-demand service scenarios, a video-on-demand server supporting HLS (HTTP Live Streaming, a streaming media network transmission protocol based on HTTP) video-on-demand scenarios, a video-on-demand server supporting DASH (Dynamic Adaptive Streaming over HTTP, a dynamic adaptive bit rate stream based on HTTP) video-on-demand service scenarios, a live broadcast server supporting HLS live broadcast scenarios, a live broadcast server supporting RTMP (Real Time Message Protocol) live broadcast scenario, a live broadcast server supporting HTTP-FLV live broadcast scenarios, a server supporting HTTP file request scenarios, a static file server, a cache server, etc. The above servers can be classified as live broadcast file sending servers and non-live broadcast file sending servers. The application scenario of the present application is universal, mainly for service scenarios with massive small files. The difference between the above listed service types is only that the types and protocols of small files are different. From the perspective of the operating system, they all belong to file provision services, and the files ultimately need to be stored on the hard disk, so the embodiments of the present application are all applicable.

The embodiment of the present application improves the I/O performance of the server system in the case of file services with large traffic by aggregating hot files into aggregated files. In practical applications, the service type of file provision service of the server is divided into a live service type or a non-live service type.

For the live broadcast type, since the hot file content of live broadcast types naturally have continuity, the hot content of the live broadcast file can be pre-pulled and aggregated in advance to improve I/O performance.

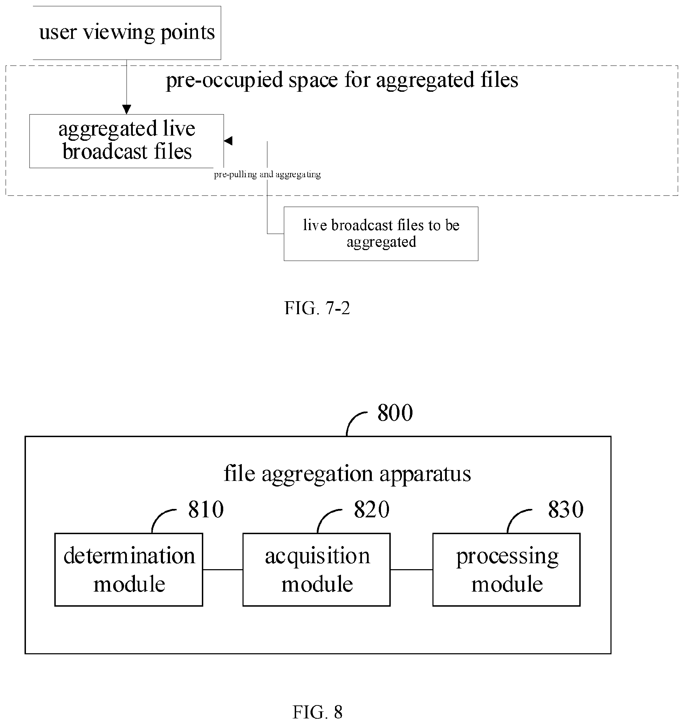

For example, during the hot time period, due to the natural continuity of the live broadcast type, taking HLS live broadcast as an example, as shown in Fig. 7-2, the file aggregation module pulls down the next live video file in advance according to the live M3U8 file within the hot time period before the user request triggers the next live video file, and aggregates it into an aggregated file of a certain size, with the TV channel where the live video is located as the dimension, at the same time, records the aggregated file corresponding to the live video file and the corresponding position of the live video file in the aggregated file. In this way, for the live broadcast file sending server, the content of the live broadcast file in the hot time period can be pre-pulled and aggregated in advance to ensure that the live broadcast files viewed by users during the hot peak period are files already aggregated. Due to the continuity of live broadcast files, the hard disk can pre-read in advance when reading files (operating system mechanism), which greatly reduces the time for the operating system to search for small files in storage, reduces the number of address lookups, and improves I/O performance. In addition, pre-pulling and aggregating the hot live broadcast files can reduce the return-to-source requests triggered by user requests, pull them down in advance, avoid triggering the return-to-source requests, and reduce server response time.

For non-live broadcast types, popularities are sorted according to the number of file accesses, and the most popular files are aggregated. Since subsequent users are likely to access the aggregated hot files, the probability of finding the required files from the aggregated files is greatly improved, thus saving the I/O resources.

For example, for the file provision services of non-live broadcast type, such as on-demand services, the most popular on-demand files can be aggregated into aggregated files of a certain size according to the sorting order of hot files, and the aggregated files corresponding to the on-demand files and the corresponding positions of the on-demand files in the aggregated files can be recorded at the same time.

In actual applications, since most of the traffic of Internet file requests is concentrated on a small number of hot files, these hot files are aggregated, and subsequent new users will also have a high probability of accessing these aggregated hot files when accessing files. Therefore, in this case, the server does not need to search for a large number of fragmented small files on the server. Since the hot small files are concentrated in the same sector of the hard disk, I/O resources are saved. After actual pilot verification of the existing network server, it was found that after adopting the hot file aggregation method, the first packet delay of the service decreased by 50%, the hard disk usage rate decreased by 30%, the CPU usage rate decreased by 20%, the IOPS (Input/Output Operations Per Second) of a single hard disk decreased by 10%, and the CPU I/O delay decreased by 30%, which is more obvious in terms of server I/O performance.

Based on the same concept as the above-mentioned file aggregation method embodiment, the embodiment of the present application also provides a file aggregation apparatus.

As shown in Fig. 8, the embodiment of the present application provides a file aggregation apparatus, comprising: a determination module 810 for determining a target dimension for selecting a hot file, the hot file is a file of concern; an acquisition module 820 for acquiring hot files selected according to the target dimension, the number of the hot files is multiple and the hot files are part of the files on the server; a processing module 830 for performing aggregation processing on the hot files so as to obtain an aggregated file containing the hot files.

The file aggregation apparatus provided according to the embodiment of the present application comprises a determination module for determining a target dimension for selecting a hot file, the hot file is a file of concern; an acquisition module for acquiring hot files selected according to the target dimension, the number of the hot files is multiple and the hot files are part of the files on the server; and a processing module for performing aggregation processing on the hot files so as to obtain an aggregated file containing the hot files. In this way, on the one hand, by performing aggregation processing on the files to obtain aggregated files, the files required by the client can be easily found in the aggregated files, thus narrowing the search scope; on the other hand, since the files performed aggregation processing are hot files, which are files of concern, the probability of finding the required files from the aggregated files can be greatly improved by searching from the aggregated files containing the hot files; through these two aspects, the required file can be quickly found, thus solving the technical problem of difficulty in quickly finding the files required by the client from the server.

Optionally, for the file aggregation apparatus provided in the embodiment of the present application, in the process of determining the target dimension for selecting hot files, the determination module is specifically for: determining the service type of the file provision service of the server; determining the target dimension for selecting the hot files based on the service type.

In this way, the file aggregation method provided in the embodiment of the present application can select hot files from files with specific type according to specific dimensions based on the service type of the file provision service of the server, so as to quickly find the files corresponding to the file provision service required by the client from the server.

Optionally, for the file aggregation apparatus provided in the embodiment of the present application, in the process of determining the target dimension for selecting a hot file based on the service type, the determination module is specifically for: if the service type is a live broadcast type, determining the target dimension for selecting a hot file to be a hot time period; if the service type is a non-live broadcast type, determining the target dimension for selecting a hot file to be the number of file accesses.

In the process of determining the target dimension for acquiring hot files selected according to the target dimension, the acquisition module is specifically for: if the target dimension is the hot time period, determining a target file that has been accessed within the hot time period from service files of the server, and using the target file as a hot file; if the target dimension is the number of file accesses, determining a designated file whose number of file accesses exceeds a first threshold within a preset time period from service files of the server, and using the designated file as a hot file.

In this way, when the service type is a live broadcast type, determining the target dimension as the hot time period, and determining the target files that have been accessed during the hot time period from service files of the server as hot files, so as to quickly find the live broadcast files required by the client from the server. When the service type is a non-live broadcast type, determining the target dimension as the number of file accesses, and determining a designated file whose number of file accesses exceeds a first threshold within a preset time period from service files of the server as a hot file, so as to quickly find the non-live broadcast file required by the client from the server.

Optionally, in the file aggregation apparatus provided in the embodiment of the present application, in the process of determining the target file that has been accessed within the hot time period from service files of the server, the acquisition module is specifically for: determining a target file that has been accessed within the hot time period and whose number of file accesses is greater than a second threshold from service files of the server, and using the target file as a hot file.

In this way, the file aggregation method provided in the embodiment of the present application can screen hot files according to the hot time period and the number of file accesses at the same time, thereby increasing the probability of finding hot files from the aggregated files.

Optionally, for the file aggregation apparatus provided in the embodiment of the present application, in the process of determining the target file that has been accessed within the hot time period from service files of the server, the acquisition module is specifically for: if the service type of the file provision service of the server is the live broadcast type, during the hot time period of a first statistical period and before receiving a live broadcast file request from a client, pre-determining a target file that has been accessed within the hot time period in a second statistical period from service files of the server; wherein the second statistical period is the previous statistical period of the first statistical period, and the target file is a live broadcast file.

In this way, during the hot time period of the first statistical cycle and before receiving the live broadcast file request from the client, the hot files are pre-pulled and aggregated in advance, reducing the delay caused by the server returning to source and decreasing the first packet delay for user services.

Optionally, for the file aggregation apparatus provided in the embodiment of the present application, in the process of performing aggregation processing on the hot files, the processing module is specifically for: acquiring a performance indicator of the server; if the performance indicator of the server is within a target range, performing aggregation processing on the hot files using a first aggregation frequency; if the performance indicator of the server exceeds the upper limit of the target range, performing aggregation processing on the hot files using a second aggregation frequency; the second aggregation frequency is less than the first aggregation frequency; if the performance indicator of the server is less than the lower limit of the target range, performing aggregation processing on the hot files using a third aggregation frequency; the third aggregation frequency is greater than the first aggregation frequency.

In this way, when the server's performance indicators exceed a certain threshold, decreasing the file aggregation frequency to avoid affecting actual user services; in addition, when the server's performance indicators are lower than a certain threshold, increasing the file aggregation frequency to fully utilize server resources and increase the number of file aggregations.

Optionally, the file aggregation apparatus provided in the embodiment of the present application further comprises a service module, which is for receiving a target service request from the client after performing aggregation processing on the multiple hot files, and the target service request is used to request a target file; if the target file exists in the aggregated file, sending the target file to the client, wherein the target file is a part of the aggregated file.

In this way, after performing aggregation processing on multiple hot files with high client concern to obtain an aggregated file, the file content accessed by the client is more likely to be the content of the aggregated hot file. In this case, the server can provide the contents of multiple hot files to the client at one time by providing a part of the aggregated file, without providing the contents of multiple hot files to the client one by one, thereby decreasing the number of disk seek operations on the server, improving the I/O performance of the service, and solving the problem in the related art that the disk fragmentation of the server is serious and causes the insufficient disk performance of the server.

It can be understood that in actual applications, the acquisition module is mainly responsible for statistics of hot files, receiving historical data containing accessed files transmitted by the service module, and counting hot files, screening multiple hot files to be aggregated according to different service types, and maintaining a list of hot files to be aggregated. The statistical form of hot files (i.e., target dimension) is diverse, which can be the number of file access statistics, the hot time period statistics, or a combination of the two, that is, the hot files within the hot time period statistics.

The processing module is mainly responsible for aggregating multiple hot files according to the list of hot files to be aggregated, and then writing the aggregated files to the server disk to complete the file aggregation. At the same time, it maintains the index list corresponding to the aggregated files and stores the index list in the hash table.

The service module is a common file service type module, that is, when a user sends a file request, the service module sends the requested file to the user. After receiving the user's file request, the service module first searches the index list. When the identifier of the requested file is found in the index list, the service module locates the aggregated large file according to the index list, and then takes the corresponding part of the large file (that is, the aggregated small file) for service. Since the aggregated files are all hot files, it can be ensured that the hot files with high access volume are in the same sector of the disk as much as possible, so that multiple seeks are avoided when the disk is addressing. **In** the case of continuous access to hot files, the number of disk seeks is reduced, which improves the service performance during the hot peak period.

The present application does not make specific restrictions on the disk of the server, which can be a solid-state hard disk, a mechanical hard disk, a hybrid hard disk, etc. The random read and write performance of the solid-state hard disk is good, which is suitable for random read and write of a large number of small files, the price is relatively expensive. The random read and write performance of the mechanical hard disk is poor, the price is cheap. The embodiment of the present application does not make specific restrictions on the storage type of the underlying server operating system.

In another aspect, the embodiment of the present application also provides a server, comprising a processor and a memory, the memory stores programs or instructions, and when executed by the processor, implementing the steps of the file aggregation method provided in any of the above embodiments, which will not be repeated here.

In another aspect, the embodiment of the present application also provides a readable storage medium, the readable storage medium stores programs or instructions, and when the programs or instructions being executed, implementing the steps of the file aggregation method provided in any of the above embodiments, which will not be repeated here.

It should be noted that, the terms "include", "comprises" or any other variants thereof herein are intended to cover non-exclusive inclusion, so that a process, method, article or apparatus including a series of elements includes not only those elements, but also other elements not explicitly listed, or also includes elements inherent to such process, method, article or apparatus. In the absence of further restrictions, an element defined by the sentence "comprising a ..." does not exclude the presence of other identical elements in the process, method, article or apparatus comprising the element. In addition, it should be noted that the scope of the method and apparatus in the embodiments of the present application is not limited to performing functions in the order shown or discussed, and may also include performing functions in a substantially simultaneous manner or in a reverse order according to the functions involved. For example, the described method may be performed in an order different from that described, and various steps may be added, omitted, or combined. In addition, the features described with reference to certain examples may be combined in other examples.

Through the description of the above implementations, those skilled in the art can clearly understand that the above-mentioned embodiment methods can be implemented by means of software and a necessary general hardware platform, and of course by hardware, but in many cases the former is a better implementation way. Based on such an understanding, the technical solution of the present application, or the part that contributes to the prior art, can be embodied in the form of a computer software product, which is stored in a storage medium (such as ROM/RAM, a magnetic disk, or an optical disk), and includes a number of instructions for enabling a terminal (which can be a mobile phone, a computer, a server, or a network device, etc.) to execute the methods described in each embodiment of the present application.

The embodiments of the present application are described above in conjunction with the accompanying drawings, but the present application is not limited to the above-mentioned specific implementation. The above-mentioned specific implementations are merely illustrative and not restrictive. Under the guidance of the present application, those skilled in the art can also make many forms without departing from the purpose of the present application and the scope of protection of the claims, all of which are within the protection of the present application.

## Claims

1. A file aggregation method, applied to a server, comprising:
determining a target dimension for selecting a hot file, the hot file being a file of concern;
acquiring hot files selected according to the target dimension, the number of the hot files being multiple and the hot files being part of the files on the server; and
performing aggregation processing on the hot files so as to obtain an aggregated file containing the hot files.

2. The file aggregation method according to claim 1, wherein determining a target dimension for selecting a hot file comprising:
determining a service type of a file provision service of the server;
determining a target dimension for selecting a hot file based on the service type.

3. The file aggregation method according to claim 2, wherein the service type comprises a live broadcast type;
determining a target dimension for selecting a hot file based on the service type comprising:
in case of that the service type is a live broadcast type, determining a target dimension for selecting a hot file to be a hot time period;
in case of that the service type is a non-live broadcast type, determining a target dimension for selecting a hot file to be the number of file accesses.

4. The file aggregation method according to any one of claims 1-3, wherein acquiring hot files selected according to the target dimension comprising:
in case of that the target dimension is a hot time period, determining a target file that has been accessed within the hot time period from service files of the server, and taking the target file as a hot file;
in case of that the target dimension is the number of file accesses, determining a designated file whose number of file accesses exceeds a first threshold within a preset time period from the service files of the server, and taking the designated file as a hot file.

5. The file aggregation method according to claim 4, wherein determining a target file that has been accessed within the hot time period from service files of the server comprising:
determining a target file that has been accessed within the hot time period and whose number of file accesses is greater than a second threshold from the service files of the server, and taking the target file as a hot file.

6. The file aggregation method according to claim 4, wherein determining a target file that has been accessed within the hot time period from service files of the server comprising:
in case of that the service type of the file provision service of the server is a live broadcast type, during the hot time period of a first statistical period and before receiving a live broadcast file request from a client, pre-determining a target file that has been accessed within the hot time period in a second statistical period from the service files of the server;
wherein the second statistical period is the previous statistical period of the first statistical period, and the target file is a live broadcast file.

7. The file aggregation method according to claim 1, wherein performing aggregation processing on the hot files comprising:
acquiring a performance indicator of the server;
in case of that the performance indicator of the server is within a target range, performing aggregation processing on the hot files using a first aggregation frequency;
in case of that the performance indicator of the server exceeds the upper limit of the target range, performing aggregation processing on the hot files using a second aggregation frequency; the second aggregation frequency being less than the first aggregation frequency;
in case of that the performance indicator of the server is less than the lower limit of the target range, performing aggregation processing on the hot files using a third aggregation frequency; the third aggregation frequency being greater than the first aggregation frequency.

8. The file aggregation method according to claim 7, wherein the performance indicator comprises CPU usage rate, memory usage rate, input/output indicator or network occupancy indicator.

9. The file aggregation method according to claim 1, wherein the aggregated file is located in the same sector of the server.

10. The file aggregation method according to claim 1, wherein after performing aggregation processing on the hot files, the method further comprising:
receiving a target service request from a client, the target service request being used to request a target file;
in case of that the target file exists in the aggregated file, sending the target file to the client, wherein the target file is a part of the aggregated file.

11. A file aggregation apparatus, comprising:
a determination module for determining a target dimension for selecting a hot file, the hot file being a file of concern;
an acquisition module for acquiring hot files selected according to the target dimension, the number of the hot files being multiple and the hot files being part of the files on the server; and
a processing module for performing aggregation processing on the hot files so as to obtain an aggregated file containing the hot files.

12. A server comprising a processor and a memory, wherein the memory stores a program or instructions thereon, which, when executed by the processor, implement the steps of the method according to any one of claims 1 to 10.

13. A readable storage medium, having programs or instructions stored thereon, which, when executed, implement the steps of the method according to any one of claims 1 to 10.
